# EUROPÄISCHE PATENTANMELDUNG

(11) **EP 1 685 921 A1**
(43) Veröffentlichungstag der Anmeldung: **02.08.2006**
(21) Anmeldenummer: 06001500.5
(22) Anmeldetag: 25.01.2006
(51) Int. Cl.: B23K 26/02, B23K 26/24, B23K 26/32, B23K 37/04, B23K 101/18, B23K 101/34, B23K 101/04

(54) **Verfahren und Vorrichtung zum Entgasen von mindestens zwei aufeinander gespannten, einen Beschichtungswerkstoff aufweisenden Blechen beim Laserschweissen mit gegenüber dem Fokus des Laserstrahles in Schweissvorrichtung in einem Abstand vorgelagerten Andrückelementen**

(30) Priorität: 26.01.2005 DE 102005003584
(71) Anmelder: ThyssenKrupp Drauz Nothelfer GmbH, 74076 Heilbronn (DE)
(72) Erfinder: Fiebig, Thomas, 09394 Hohndorf (DE); Jucht, Horst, 09337 Hohenstein-Ernstthal (DE); Keller, Berthold, 09350 Lichtenstein (DE); Stein, Hans, 09337 Hohenstein-Ernstthal (DE)
(74) Vertreter: Findeisen Hübner Neumann Seerig

(57) **Zusammenfassung**

Die Erfindung betrifft ein Verfahren und eine Vorrichtung zum Entgasen von mindestens zwei aufeinander gespannten, einen Beschichtungswerkstoff aufweisenden Blechen (2,3) beim Laserschweißen, wobei das Spannen der Flansche der Bleche (2,3) mittels mit dem Laserstrahl (4) eines Laserschweißkopfes (1) mitlaufenden Andrückelementen (6,7) vorgenommen wird.

Während es Aufgabe der Erfindung ist, ein Verfahren vorzuschlagen, mit dem eine wirksame Entgasung des verdampfenden Beschichtungswerkstoffes ohne die Verwendung einer zusätzlichen Spalterzeugungsvorrichtung abgesichert und eine Verschmutzung der Andrückelemente (6,7) reduziert werden kann, wird diese dadurch gelöst, dass die Andrückelemente (6,7) dem Laserstrahl (4) derartig vorauslaufen, dass durch die vom Laserstrahl (4) eingebrachte Wärmemenge zwischen dem Fokus (5) des Laserstrahles (4) und den Andrückelementen (6,7) eine nach außen gerichtete, hohlraumbildende Aufwölbung (8) eines oder aller Bleche (2,3) erfolgt, in der die Gase des verdampfenden Beschichtungswerkstoffes aufgenommen und nachfolgend zwischen den Blechen (2,3) nach außen abgeführt werden, wobei dieser Hohlraum beim Schweißvorgang in Schweiß- und Vorschubrichtung (Pfeil A) vor dem Laserstrahl (4) herläuft.

## Beschreibung

Die Erfindung betrifft ein Verfahren und eine Vorrichtung zum Entgasen von mindestens zwei aufeinander gespannten, einen Beschichtungswerkstoff aufweisenden Blechen beim Laserschweißen, wobei das Spannen der Flansche der Bleche mittels mit dem Laserstrahl eines Laserschweißkopfes mitlaufenden Andrückelementen vorgenommen wird. Anwendung findet die Lösung insbesondere beim Laserschweißen von Blechen für Kraftfahrzeug-Karosserien.

Nach der DE 89 00 556 U1 ist eine Lösung bekannt, mit der Bleche durch Laserschweißen verbunden werden, wobei die Bleche so dicht wie möglich neben der Laserfokussiereinheit durch aus zwei Rollen oder eine Rolle und ein Widerlager ausgebildete Andrückelemente gegeneinander pressbar und dabei die Rollen bzw. die Rolle und die Laserfokussiereinheit gemeinsam beweglich miteinander verbunden sind.
Demgegenüber ist das Andrückelement nach der DE 44 15 035 C2 als stiftförmiger Niederhalter ausgestaltet und wiederum in unmittelbarer Nähe des Fokus der Laserfokussiereinheit befindlich. Beide Lösungen sind nicht dazu geeignet die Flansche von Blechen zu verschweißen, die einen Beschichtungswerkstoff (z. B. Zink) aufweisen, da der beim Schweißen zwischen den Blechen verdampfende Beschichtungswerkstoff nicht entweichen kann, so dass dessen Gase explosionsartig durch die noch flüssige Schweißnaht austreten und damit deren die Qualität erheblich beeinträchtigen.
Abhilfe für dieses Problem wird geschaffen, indem Zusatzeinrichtungen zur Anwendung kommen, die eine Spalterzeugung zwischen den zu verschweißenden Blechen bewirken. Ermöglicht wird die für die ungehinderte Entgasung notwendige Spalterzeugung zwischen den Blechen beispielsweise durch eine unter Vorspannung an den Blechflanschen angreifende Druckrolle (DE 101 33 522 B4), zwischen die Bleche eindrückbare Schneiden (DE 101 59 459 B4) oder durch einen mit Rillen o. ä. ausgestatteten Spreizkörper realisiert, der mit den Kanten der Bleche kraftschlüssig in Eingriff bringbar ist (DE 101 60 156 C1).
Letztere Lösungen haben den Nachteil, dass eine Entgasung der Schweißstelle nur durch einen zusätzlichen vorrichtungstechnischen Aufwand abgesichert werden kann, der zudem im Rahmen automatisierter Schweißprozesse weitere Einschränkungen bezüglich der realisierbaren Arbeitsgeschwindigkeit aufwirft. Außerdem wird hierbei auch von einer unmittelbaren räumlichen Nähe der Andrückelemente mit dem Fokus des Laserstrahles ausgegangen, so dass eine Verschmutzung der Andrückelemente und damit eine Beeinträchtigung deren Funktionssicherheit und Standzeit eintritt.

Die Aufgabe der Erfindung besteht darin, ein Verfahren vorzuschlagen, mit dem eine wirksame Entgasung des verdampfenden Beschichtungswerkstoffes ohne die Verwendung einer zusätzlichen Spalterzeugungsvorrichtung abgesichert und eine Verschmutzung der Andrückelemente reduziert werden kann.

Diese Aufgabe wird bei einem gattungsgemäßen Verfahren mit den im Kennzeichen des Patentanspruchs 1 angegebenen Merkmalen gelöst.

Es wurde gefunden, dass durch die vom Laserstrahl in die Schweißstelle der Blechflansche eingeleitete Energie eine sich in Form einer Materialausdehnung widerspiegelnde örtliche begrenzte Verformung des Bleches vollzieht, in deren Folge eine leicht ballige und nach außen gerichtete Aufwölbung entsteht, unter der sich ein blasenförmiger Hohlraum befindet. Diese Aufwölbung läuft beim Schweißen vor dem Laserstrahl her und ist in der Lage den verdampfenden Beschichtungswerkstoff aufzunehmen und auch derartig seitlich nach außen abzuführen, dass die noch flüssige Schweißnaht selbst von der Gasabführung des Beschichtungswerkstoffes nicht mehr beeinträchtigt wird. Diese Wirkungsweise setzt voraus, dass die die Flansche der Bleche spannenden Andrückelemente in einem derartigen Abstand dem Laserstrahl bzw. dessen Fokus vorgelagert laufend angeordnet sind, dass sich in Abhängigkeit der Geometrie (Schweißnahtverlauf) und der Schweißbarkeit der Bauteile, eine von den Andrückelementen im Wesentlichen ungehinderte Aufwölbung vollziehen kann.

Die Vorteile der Erfindung bestehen darin, dass ohne zusätzlichen vorrichtungstechnischen Aufwand eine die Homogenität der Schweißnaht sichernde Entgasung des Beschichtungswerkstoffes erfolgen und die Verschmutzung Andrückelemente reduziert werden kann.

Vorteilhafte Weiterbildungen der Erfindung sind aus Patentansprüchen 2 bis 5 ersichtlich.

Die Erfindung soll nachfolgend an einem Ausführungsbeispiel und zugehörigen Zeichnungen näher erläutert werden.

### Es zeigen:

- Fig. 1: eine perspektivische Ansicht der erfindungsgemäßen Vorrichtung
- Fig. 2: eine vergrößerte Seitenansicht der erfindungsgemäßen Vorrichtung

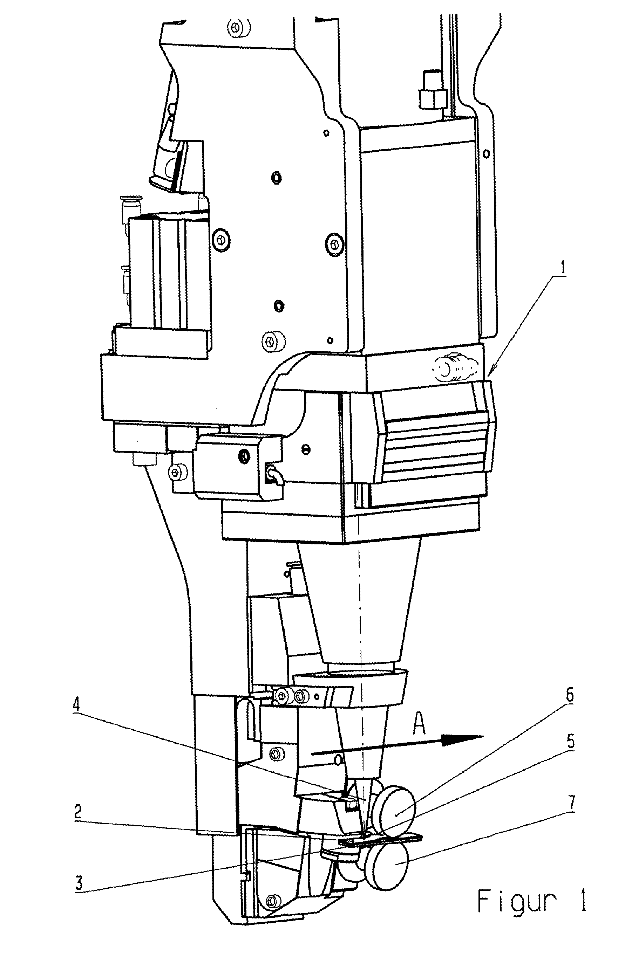

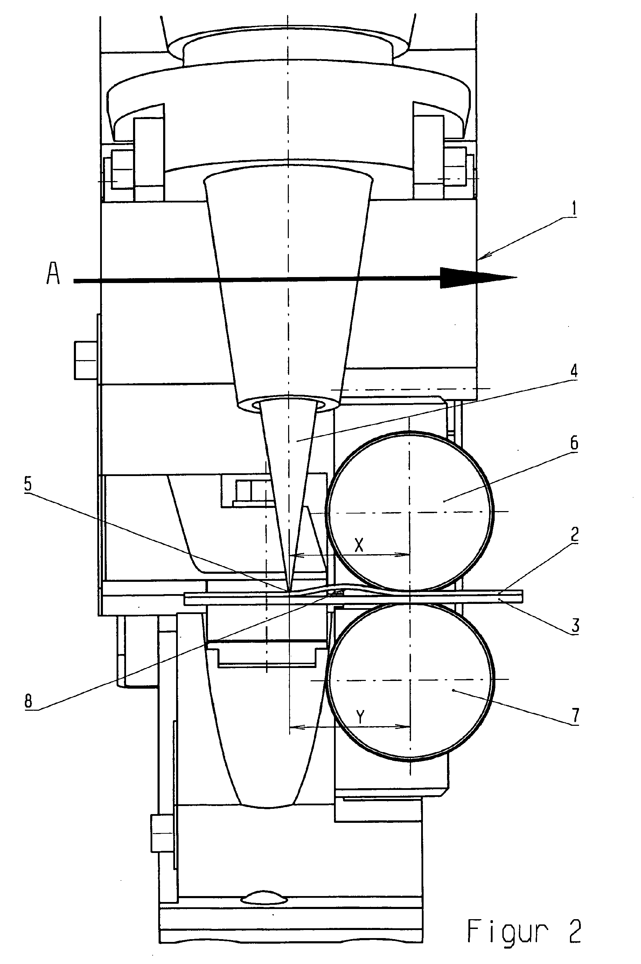

In der Fig. 1 ist ein Laserschweißkopf 1 zum Verschweißen von beispielhaft zwei Blechen 2, 3 mittels einer durch einen Laserstrahl 4 in dessen Fokus 5 erzeugten Schweißnaht dargestellt, wobei die Bleche 2, 3 einen Beschichtungswerkstoff aufweisen. Dieser Laserschweißkopf 1 ist an einem Arm eines nicht dargestellten Roboters angeordnet. Zum zangenartigen Aufeinanderspannen der Bleche 2, 3 sind am Laserschweißkopf 1 als drehbare Spannrollen ausgebildete Andrückelemente 6, 7 angeordnet, die somit die in Richtung des Pfeils A erfolgende Schweiß- und Vorschubbewegung des Laserschweißkopfes 1 zur Herstellung der Schweißnaht mitlaufend vollziehen. Beide Andrückelemente 6, 7 sind gegenüber dem Fokus 5 des Laserstrahles 4 in Schweiß- und Vorschubrichtung des Laserschweißkopfes 1 in einem Abstand X bzw. Y vorgelagert angeordnet, wobei die in der Fig. 2 gezeigten Abstände X und Y des oberen Andrückelements 6 und des unteren Andrückelements 7 gleich groß ausgestaltet sind (X = Y) und dabei unter den beispielhaften Bedingungen, dass die spannrollenförmigen Andrückelemente 6, 7 einen Durchmesser von 22 mm aufweisen und der Fokuspunkt auf der Abrolllinie des Andrückelements 6 liegt 16 mm betragen.
In Abhängigkeit von der zu lösenden Schweißaufgabe kann der Abstand Y des unteren Andrückelements 7 zum Fokus 5 auch kleiner als der Abstand X des oberen Andrückelements 6 zum Fokus 5 ausgebildet sein. Ebenso besteht die Möglichkeit auch mehr als zwei Bleche 2, 3 (z.B. drei Bleche) miteinander zu verschweißen.

Nachfolgend soll die Funktionsweise des erfindungsgemäßen Verfahrens und der danach arbeitenden Vorrichtung zum Entgasen von mindestens zwei aufeinander gespannten, einen Beschichtung aufweisenden Blechen beim Laserschweißen erläutert werden:

Nachdem der Laserschweißkopf 1 mittels des Roboters im Bereich der zu verschweißenden Bleche 2, 3 positioniert worden ist, werden diese von den Andrückelementen 6, 7 aufeinander gespannt und der Schweißvorgang eingeleitet. Dadurch das die Andrückelemente 6, 7 dem Laserstrahl 4 in Schweiß- und Vorschubrichtung (Pfeil A) vorauslaufen, kann durch die vom Laserstrahl 4 eingebrachte Wärmemenge zwischen dem Fokus 5 des Laserstrahles 4 und den Andrückelementen 6, 7 eine nach außen gerichtete, hohlraumbildende Aufwölbung 8 eines oder beider Bleche 2, 3 erfolgen, in der die Gase des verdampfenden Beschichtungswerkstoffes aufgenommen und nachfolgend zwischen den Blechen 2, 3 nach außen abgeführt werden. Ob sich nur an einem oder beiden Blechen 2, 3 diese Aufwölbung 8 einstellt ist von der Dicke der Bleche 2, 3 und den jeweiligen Verfahrensbedingungen abhängig. Ist beispielsweise das dem Laserstrahl 4 zugewandte Blech 2 relativ dünn und das Blech 3 dick ausgebildet, so wird sich die Aufwölbung nur am Blech 2 ausbilden (siehe Fig. 2). Sind beide Bleche 2, 3 dünn, gestaltet sich die hohlraumbildende Aufwölbung 8 an beiden Blechen 2, 3 spiegelbildlich aus (nicht dargestellt).

### Bezugszeichenliste

- 1: Laserschweißkopf
- 2: Blech
- 3: Blech
- 4: Laserstrahl
- 5: Fokus
- 6: Andrückelement
- 7: Andrückelement
- 8: Aufwölbung

## Patentansprüche

1. Verfahren zum Entgasen von mindestens zwei aufeinander gespannten, einen Beschichtungswerkstoff aufweisenden Blechen beim Laserschweißen, wobei das Spannen der Bleche mittels mit dem Laserstrahl eines Laserschweißkopfes mitlaufenden Andrückelementen vorgenommen wird,
**dadurch gekennzeichnet,**
**dass** die Andrückelemente (6, 7) dem Laserstrahl (4) derartig vorauslaufen, dass durch die vom Laserstrahl (4) eingebrachte Wärmemenge zwischen dem Fokus (5) des Laserstrahles (4) und den Andrückelementen (6,7) eine nach außen gerichtete, hohlraumbildende Aufwölbung (8) eines oder aller Bleche (2, 3) erfolgt, in der die Gase des verdampfenden Beschichtungswerkstoffes aufgenommen und nachfolgend zwischen den Blechen (2,3) nach außen abgeführt werden, wobei dieser Hohlraum beim Schweißvorgang in Schweiß- und Vorschubrichtung (Pfeil A) vor dem Laserstrahl (4) herläuft.

2. Vorrichtung zur Durchführung des Verfahrens nach Anspruch 1,
**dadurch gekennzeichnet,**
**dass** die Andrückelemente (6, 7) gegenüber dem Fokus (5) des Laserstrahles (4) in Schweiß- und Vorschubrichtung (Pfeil A) des Laserschweißkopfes (1) in einem Abstand (X bzw. Y) vorgelagert angeordnet sind.

3. Vorrichtung zur Durchführung des Verfahrens nach Anspruch 2,
**dadurch gekennzeichnet,**
**dass** der Abstand (X) zwischen dem Fokus (5) und dem oberen Andrückelement (6) gleich oder kleiner dem Abstand (Y) zwischen dem Fokus (5) und dem unteren Andrückelement (7) ausgebildet ist.

4. Vorrichtung zur Durchführung des Verfahrens nach Anspruch 2 oder 3,
**dadurch gekennzeichnet,**
**dass** der Abstand (X bzw. Y) 10 bis 20 mm beträgt.

5. Vorrichtung zur Durchführung des Verfahrens nach Anspruch 2 oder 3,
**dadurch gekennzeichnet,**
**dass** die Andrückelemente (6, 7) als drehbare Spannrollen ausgestaltet sind.
